# EUROPEAN PATENT SPECIFICATION

(11) **EP 2 003 047 B1**
(45) Date of publication and mention of the grant of the patent: **04.11.2009**
(21) Application number: 07011629.8
(22) Date of filing: 13.06.2007
(51) Int. Cl.: B62J 1/08, F04B 33/00

(54) **Dual-function bicycle seat post assembly**
Fahrradsattelträgeranordnung mit zwei Funktionen
Ensemble de tige de selle de bicyclette à double fonction

(43) Date of publication of application: 17.12.2008
(73) Proprietor: Laing Ban International Inc., Sinjhuang City, Taipei County 242 (TW)
(72) Inventor: Hsu, Mei-Yen, Lingya District, Kaohsiung City 802 (TW)
(74) Representative: Dossmann, Gérard

(56) References cited:
- DE-U1- 20 204 477
- FR-A- 895 320
- FR-A- 983 310
- GB-A- 2 211 800
- US-A- 1 270 661
- US-A- 5 016 894
- US-A- 5 324 174

## Description

The present invention relates to a bicycle seat post assembly which provides shock absorbing feature when a first seal member is connected to a lower end of the outer tube, and can be used as a pump when removing the first seal member.

A conventional bicycle seat post is simply a rod connected with the seat and can be inserted into the seat tube of the bicycle frame. Some manufacturers insert springs in the seat tube to provide shock absorbing feature for the seat. However, the seat post cannot contact the spring if the seat is adjusted to be located at a higher position. Some manufacturers equip the seat tube with a space filled with pressurized air which can be compressible so as to absorb shocks.

Besides, a tire pump is needed when the tire flats and the tire pump has to be positioned at a rack fixed on the bicycle frame. The tire pump increases the weight of the bicycle and some users do not like to carry the tire pump which is seldom used.

A bicycle seat post assembly is known from the document US-A-1270661.

The present invention intends to provide a bicycle seat post assembly which provides shock absorbing feature when being used in normal status, and can also be used as a tire pump when needed.

The present invention provides a bicycle seat post assembly according to claim 1.

The bicycle seat post assembly of the invention comprises an outer tube having a longitudinal passage defined therethrough and a connection member is connected to a lower end of the outer tube so as to be selectably connected with a first seal member or an output tube. An inner tube is movably inserted in the outer tube and includes a first passage defined longitudinally therethrough. A top end of the inner tube extends through the top end of the outer tube and a one-way valve is connected to a lower end of the inner tube. A seat support is connected to the top end of the inner tube and a seat is connected to the seat support. When the first seal member is connected to the connection member, it seals the lower end of the outer tube and the seat post assembly is a shock absorbing seat post assembly. When the seat post assembly is used as a tire pump, the output tube is connected to the connection member and communicates with the longitudinal passage of the outer tube.

The present invention will become more obvious from the following description when taken in connection with the accompanying drawings which show, for purposes of illustration only, a preferred embodiment in accordance with the present invention.
Fig. 1 is an exploded view to show the seat post assembly of the present invention;
Fig. 2 is a cross sectional view to show the seat post assembly of the present invention;
Fig. 3 is a cross sectional view to show when the seat post assembly is used as a shock absorbing seat post assembly, and

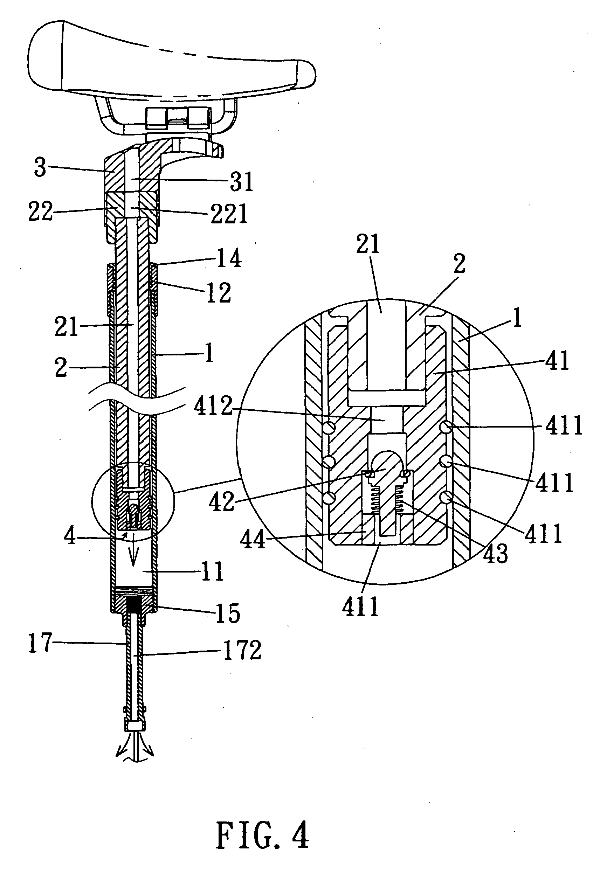

Fig. 4 is a cross sectional view to show when the seat post assembly is used as a tire pump.

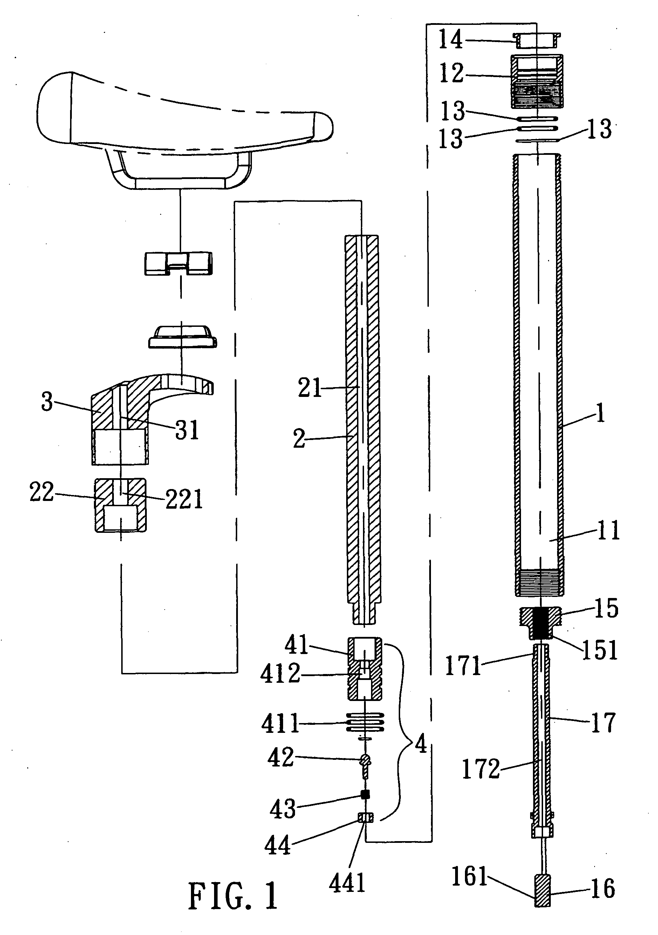

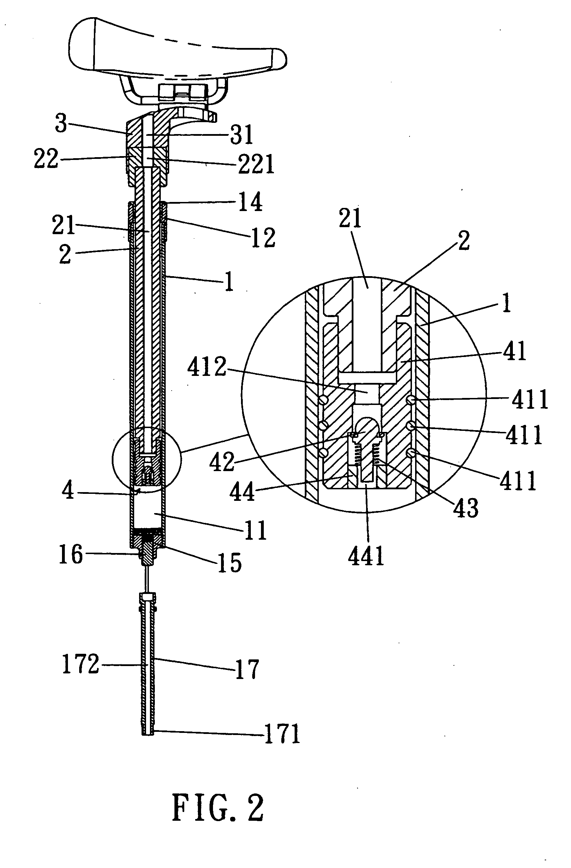

Referring to Figs. 1 and 2, the seat post assembly of the present invention comprises an outer tube 1 having a longitudinal passage 11 defined therethrough and a first top cap 12 is connected to a top end of the outer tube 1. A plurality of seal rings 13 are located between an inner periphery of the first top cap 12 and an outer periphery of the outer tube 1. A bush 14 is inserted in the first top cap 12. A connection member 15 is threadedly connected to a lower end of the outer tube 1 and includes an inner threaded passage 151.

An inner tube 2 is movably inserted in the outer tube 1 and includes a first passage 21 defined longitudinally therethrough. A top end of the inner tube 2 extends through the bush 14 in the top cap 12 on the top end of the outer tube 1 and a second top cap 22 is connected to the top end of the inner tube 2. A seat support 3 is connected to the top cap 22 and a seat is connected to the seat support 3. A one-way valve 4 is connected to a lower end of the inner tube 2 and includes a tubular body 41 connected to the lower end of the inner tube 2 and a plurality of seal rings 411 are mounted to the tubular body 41. A stepped hole 412 is defined in the tubular body 41 and an end member 44 is connected to a lower end of the tubular body 41. The end member 44 includes a hole 441 defined longitudinally therethrough. A second seal member 42 and a spring 43 are received in the tubular body 41 and the second seal member 42 is biased by the spring 43 which is located between a head of the second seal member 42 and the end member 44. The head of the seal member 42 removably seals the stepped hole 412. The seat support 3 includes an inlet hole 31 which is in communication with the through hole 221 of the second top cap 22 and the first passage 21 of the inner tube 2.

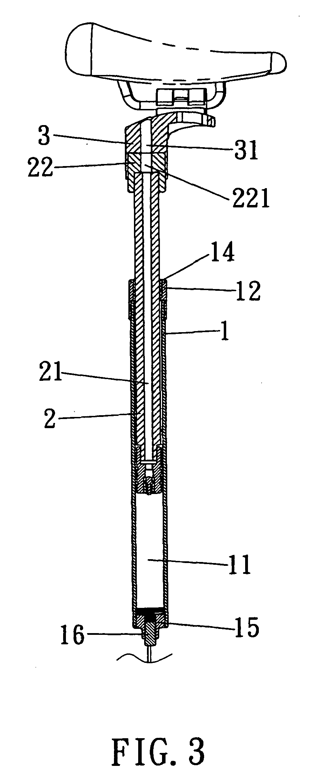

A first seal member 16 and an output tube 17 are selectably connected to the connection member 15 to have different functions. As shown in Fig. 1 and 3, the first seal member 16 includes an outer threaded section 161 which is engaged with the inner threaded passage 151 of the connection member 15 and seals the lower end of the outer tube 1. Therefore, there is an interior space 11 defined between the lower end of the inner tube 2 and the seal member 16. The interior space 11 is filled with air which is sealed in the interior space 11 and compressible so that shocks can be absorbed when the inner tube 2 together with the seat move downward relative to the seat tube of the bicycle frame to compress the air in the interior space 11.

When the output tube 17 is connected to the connection member 15 by connecting an outer threaded section 171 of the output tube 17 with the inner threaded passage 151 of the connection member 15, the second passage 172 defined through the output tube 17 communicates with the longitudinal passage of the outer tube 1. Therefore, when the seat post assembly is used as a tire pump, the user pulls the seat post assembly out from the seat tube of the bicycle frame, and move the inner tube 2 up and down to push air in the outer tube 1 out from the output tube 17 to inflate tires.

The seat post assembly includes two different functions and no extra parts are connected to the outside of the bicycle frame.

While we have shown and described the embodiment in accordance with the present invention, it should be clear to those skilled in the art that further embodiments may be made without departing from the scope of the present invention, as appended in the claims.

## Claims

1. A bicycle seat post assembly comprising:
an outer tube (1) having a longitudinal passage (11) defined therethrough and a first top cap (12) is connected to a top end of the outer tube (1), a connection member (15) connected to a lower end of the outer tube (1), a first seal member (16) and an output tube (17) selectably connected to the connection member (15), the first seal member (16) sealing the lower end of the outer tube (1) when the bicycle seat assembly is used as a shock absorbing seat post assembly, the output tube (17) connected to the connection member (15) to communicate with the longitudinal passage (11) of the outer tube (1) when the seat post assembly is used as a tire pump;
an inner tube (2) movably inserted in the outer tube (1) and including a first passage (21) defined longitudinally therethrough, a top end of the inner tube (2) extending through the top cap (12, 22) on the top end of the outer tube (1) and a one-way valve (4) connected to a lower end of the inner tube, the one-way valve (4) including a tubular body (41) connected to the lower end of the inner tube (2) and a plurality of seal rings (411) mounted to the tubular body (41), a stepped hole (412) defined in the tubular body (41) and an end member (44) connected to a lower end of the tubular body (41), the end member (44) including a hole (441) defined longitudinally therethrough, a second seal member (42) and a spring (43) received in the tubular body (41) and the second seal member (42) being biased by the spring (43) which is located between a head of the seal member (42) and the end member (44), the head of the second seal member (42) removably sealing the stepped hole (412) which is in communication with the first passage(21), and
a seat support (3) connected to the top end of the inner tube (2) and a seat connected to the seat support (3), the seat support (3) including an inlet hole (31) which is in communication with the first passage (21) of the inner tube (2) and an open top of the seat support (3), a second top cap (22) connected to the top end of the inner tube (2) and including a through hole (221) which communicates with the inlet hole (31) and the first passage (21).

2. The assembly as claimed in claim 1, wherein a plurality of seal rings (13) are located between an inner periphery of the first top cap (12) and an outer periphery of the outer tube (1).

3. The assembly as claimed in claim 1, wherein a bush (14) is inserted in the first top cap (12) and the inner tube (2) movably extends through the bush (14).

4. The assembly as claimed in claim 1, wherein the connection member (15) includes an inner threaded passage (151) and the seal member (16) includes an outer threaded section (161) which is engaged with the inner threaded passage (151).

5. The assembly as claimed in claim 1, wherein the connection member (15) includes an inner threaded passage (151) and the output tube (17) includes an outer threaded section (171) which is engaged with the inner threaded passage (151).

## Patentansprüche

1. Fahrradsattelträgeranordnung, umfassend:
ein äußeres Rohr (1), welches einen Durchgang in Längsrichtung (11), der ebendort hindurch definiert ist, und wobei eine erste obere Kappe (12) mit einem oberen Ende des äußeren Rohrs (1) verbunden ist, ein Verbindungselement (15), welches mit einem unteren Ende des äußeren Rohrs (1) verbunden ist, ein erstes Dichtungselement (16) und ein Ausgaberohr (17) aufweist, welches ausgewählt mit dem Verbindungselement (15) verbunden ist, wobei das erste Dichtungselement (16) das untere Ende des äußeren Rohrs (1) abdichtet, wenn die Fahrradsattelträgeranordnung als eine stoßdämpfende Fahrradsattelträgeranordnung Verwendung findet, wobei das Ausgaberohr (17) mit dem Verbindungselement (15) verbunden ist, um mit dem Durchgang in Längsrichtung (11) des äußeren Rohrs (1) zu kommunizieren, wenn die Fahrradsattelträgeranordnung als eine Fahrradpumpe verwendet wird;
ein inneres Rohr (2), welches bewegbar in das äußere Rohr (1) eingeschoben ist und einen ersten Durchgang (21), der in Längsrichtung ebendort hindurch definiert ist, ein oberes Ende des inneren Rohrs (2), welches sich durch die obere Kappe (12, 22) auf dem oberen Ende des äußeren Rohrs (1) erstreckt, und ein Rückschlagventil (4), das mit dem unteren Ende des inneren Rohrs verbunden ist, umfasst, wobei das Rückschlagventil (4) einen rohrförmigen Körper (41), welcher mit dem unteren Ende des inneren Rohrs (2) verbunden ist, und eine Mehrzahl von Dichtungsringen (411), welche auf dem rohrförmigen Körper (41) aufgebracht ist, umfasst, ein abgestuftes Loch (412), welches im rohrförmigen Körper (41) definiert ist, und ein Endelement (44) aufweist, welches mit einem unteren Ende des rohrförmigen Körpers (41) verbunden ist, wobei das Endelement (44) ein Loch (441), welches in Längsrichtung ebendort hindurch definiert ist, ein zweites Dichtungselement (42) und eine Feder (43), welche im rohrförmigen Körper (41) aufgenommen ist und wobei das zweite Dichtungselement (42) durch die Feder (43) vorgespannt ist, die zwischen einem Kopf des Dichtungselements (42) und dem Endelement (44) angeordnet ist, umfasst, wobei der Kopf des zweiten Dichtungselements (42) entfernbar das abgestufte Loch (412) abdichtet, welches in Verbindung mit dem ersten Durchgang (21) steht, und
einen Sattelträger (3), welcher mit dem oberen Ende des inneren Rohrs (2) und einem Sattel, der auf dem Sattelträger (3) angebracht ist, verbunden ist, wobei der Sattelträger (3) ein Einlassloch (31) umfasst, welches in Verbindung mit dem ersten Durchgang (21) des inneren Rohrs (2) und einem offenen oberen Ende des Sattelträgers (3) steht, wobei eine zweite obere Kappe (22) mit dem oberen Ende des inneren Rohrs (2) verbunden ist und ein Durchgangsloch (221) umfasst, das mit dem Einlassloch (31) und dem ersten Durchgang (21) in kommunizierender Verbindung steht.

2. Anordnung gemäß Anspruch 1, wobei eine Mehrzahl von Dichtungsringen (13) zwischen einem inneren Umfang der ersten oberen Kappe (12) und einem äußeren Umfang des äußeren Rohrs (1) angeordnet ist.

3. Anordnung gemäß Anspruch 1, wobei eine Hülse (14) in die erste obere Kappe (12) eingeschoben ist und sich das innere Rohr (2) bewegbar durch die Hülse (14) erstreckt.

4. Anordnung gemäß Anspruch 1, wobei das Verbindungselement (15) einen mit Innengewinde versehenen Durchgang (151) umfasst und das Dichtungselement (16) einen mit Außengewinde versehenen Abschnitt (161) umfasst, welcher mit dem mit Innengewinde versehenen Durchgang (151) in Eingriff steht.

5. Anordnung gemäß Anspruch 1, wobei das Verbindungselement (15) einen mit Innengewinde versehenen Durchgang (151) umfasst und das Ausgaberohr (17) einen mit Außengewinde versehenen Abschnitt (171) umfasst, welcher mit dem mit Innengewinde versehenen Durchgang (151) in Eingriff steht.

## Revendications

1. Ensemble de tige de selle de bicyclette comprenant :
un tube extérieur (1) comportant un passage longitudinal (11) défini à travers celui-ci et un premier bouchon supérieur (12) est connecté à une extrémité supérieure du tube extérieur (1), un élément de connexion (15) connecté à une extrémité inférieure du tube extérieur (1), un premier élément d'étanchéité (16) et un tube de sortie (17) connecté au choix à l'élément de connexion (15), le premier élément d'étanchéité (16) fermant hermétiquement l'extrémité inférieure du tube extérieur (1) quand l'ensemble de selle de bicyclette est utilisé comme ensemble de tige de selle amortisseur, le tube de sortie (17) connecté à l'élément de connexion (15) pour communiquer avec le passage longitudinal (11) du tube extérieur (1) quand l'ensemble de tige de selle est utilisé comme pompe de gonflage de pneus ;
un tube intérieur (2) inséré de façon mobile dans le tube extérieur (1) et comprenant un premier passage (21) défini de manière longitudinale à travers celui-ci, une extrémité supérieure du tube intérieur (2) s'étendant à travers le bouchon supérieur (12,22) sur l'extrémité supérieure du tube extérieur (1) et un clapet de non-retour (4) connecté à une extrémité inférieure du tube intérieur, le clapet de non-retour (4) comprenant un corps tubulaire (41) connecté à l'extrémité inférieure du tube intérieur (2) et une pluralité de bagues d'étanchéité (411) montées sur le corps tubulaire (41), un trou étagé (412) défini dans le corps tubulaire (41) et un élément d'extrémité (44) connecté à une extrémité inférieure du corps tubulaire (41) l'élément d'extrémité (44) comportant un trou (441) défini de façon longitudinale à travers celui-ci, un deuxième élément d'étanchéité (42) et un ressort (43) logé dans le corps tubulaire (41) et le deuxième élément d'étanchéité (42) étant sollicité par le ressort (43) qui est situé entre une tête de l'élément d'étanchéité (42) et l'élément d'extrémité (44), la tête du deuxième élément d'étanchéité (42) fermant hermétiquement et de manière amovible le trou étagé (412) qui est en communication avec le premier passage (21), et un support de selle (3) connecté à l'extrémité supérieure du tube intérieur (2) et une selle connectée au support de selle (3), 1 support de selle (3) comprenant un trou d'entrée (31) qui est en communication avec le premier passage (21) du tube intérieur (2) et un sommet ouvert du support de selle (3), un deuxième bouchon supérieur (22) connecté à l'extrémité supérieure du tube intérieur (2) et comportant un trou traversant (221) qui communique avec le trou d'entrée (31) et le premier passage (21).

2. Ensemble selon la revendication 1, dans lequel une pluralité de bagues d'étanchéité (13) sont situées entre une périphérie intérieure du premier bouchon supérieur (12) et une périphérie extérieure du tube extérieur (1).

3. Ensemble selon la revendication 1, dans lequel une douille (14) est insérée dans le premier bouchon supérieur (12) et le tube intérieur (2) s'étend de manière mobile à travers la douille (14).

4. Ensemble selon la revendication 1, dans lequel l'élément de connexion (15) comprend un passage intérieur fileté (151) et l'élément d'étanchéité (16) comporte une section extérieure filetée (161) qui se met en prise avec le passage intérieur fileté (151).

5. Ensemble selon la revendication 1, dans lequel l'élément de connexion (15) comprend un passage intérieur fileté (151) et le tube extérieur (17) comprend une section extérieure filetée (171) qui se met en prise avec le passage intérieur fileté (151).
